# EUROPEAN PATENT APPLICATION

(11) **EP 4 394 017 A1**
(43) Date of publication of application: **03.07.2024**
(21) Application number: 22216725.6
(22) Date of filing: 27.12.2022
(51) Int. Cl.: C10G 21/28, B01D 1/00, C10G 21/12, B01D 11/04, C10G 31/08

(54) **A PROCESS AND PLANT FOR DESULFURIZING A CRUDE HYDROCARBON COMPOSITION, SUCH AS DIESEL OR KEROSINE**

(71) Applicant: Sulzer Management AG, 8401 Winterthur (CH)
(72) Inventor: SEAH, Ulric, Singapore 544816 (SG); LEE, Siang Hua, Singapore 652467 (SG); FÄSSLER, Peter, 4123 Allschwil (CH); PAJARO, Celso, Jenks, Oklahoma 74037 (US); KOCH, Jörg, 79418 Schliengen (DE)
(74) Representative: Henkel & Partner mbB

(57) **Abstract**

A process for desulfurizing a crude hydrocarbon composition, such as diesel or kerosine, wherein the process comprises the following steps:
a) providing an oxidized crude hydrocarbon composition containing at least one oxidized sulfur containing compound,
b) subjecting the oxidized crude hydrocarbon composition provided in step a) to a liquid-liquid extraction with an extracting agent so as to obtain an extract being enriched in the at least one oxidized sulfur containing compound and a raffinate being depleted in the at least one oxidized sulfur containing compound,
c) washing the raffinate obtained in step b) with a washing agent so as to remove remaining extracting agent from the raffinate so as to obtain a desulfurized hydrocarbon composition and a mixture of washing agent and extracting agent,
d) subjecting the extract obtained in step b) to at least one purification step so as to obtain purified extracting agent and a waste composition, wherein the purified extracting agent is at least partially recycled into step b), and
e) subjecting the mixture of washing agent and extracting agent obtained in step c) to a multi-step evaporation for separating the extracting agent from the washing agent so as to obtain purified washing agent, wherein the purified washing agent is at least partially recycled into step c), and wherein the multi-step evaporation comprises at least two subsequent evaporation steps, wherein the first evaporation step is performed at a higher pressure than the at least one subsequent evaporation step.

## Description

The present invention relates to a process and to a plant for desulfurizing a crude hydrocarbon composition, such as diesel or kerosine.

The removal of non-hydrocarbon components and in particular of sulfur containing compounds from hydrocarbon compositions is important, because such non-hydrocarbon components and in particular sulfur containing compounds may severely disturb downstream applications of the hydrocarbon compositions. One prominent example therefore are hydrocarbon fuels, such as diesel, kerosine, gasoline, fuel oil or the like, which are combusted in a combustion engine, turbine, oil burner of an oil heating or the like. During the combustion, the sulfur containing compounds are converted to harmful and toxic compounds, which significantly contribute to the environmental pollution. Furthermore, at least some of these compounds are corrosive and therefore damage combustion engines, turbines, oil heatings and the like. In addition, sulfur is a catalyst poison and such severely damages the catalyst systems of, for example, automobiles. On account of these reasons and in order to meet environmental regulations, sulfur containing compounds, such as mercaptans, sulfides, disulfides, thiophenes and the like, need to be removed from a crude hydrocarbon composition, such as diesel, petroleum or kerosine, before the desulfurized hydrocarbon composition may be used as combustion fuel.

A variety of processes for desulfurizing crude hydrocarbon compositions is known. In most of these processes firstly the sulfur containing compounds being contained in the hydrocarbon composition are oxidized and then the oxidized sulfur containing compounds are separated from the hydrocarbon composition by a separation technique. Examples for commonly used separation techniques for this purpose are those being based on liquid-liquid extraction, adsorption, precipitation and/or chemical decomposition, wherein most of these separation techniques use at least one liquid-liquid extraction step. However, the known processes for desulfurizing crude hydrocarbon compositions have one or more of the subsequent drawbacks, namely of requiring comparable high amounts of extracting agent or solvent, respectively, of being comparable energy-intensive and of achieving only an insufficient desulfurization degree.

In view of this, the object underlying the present invention is to provide a process and a plant for desulfurizing a crude hydrocarbon composition containing at least one sulfur containing compound in an industrial scale, wherein the process combines a particular low energy consumption and a particular low consumption of extracting agent, but which nevertheless leads to a purified hydrocarbon composition having a particular low sulfur content of as low as 10 ppm or even less.

In accordance with the present invention, this object is satisfied by providing a process for desulfurizing a crude hydrocarbon composition, such as diesel or kerosine, wherein the process comprises the following steps:
a) providing an oxidized crude hydrocarbon composition containing at least one oxidized sulfur containing compound,
b) subjecting the oxidized crude hydrocarbon composition provided in step a) to a liquid-liquid extraction with an extracting agent so as to obtain an extract being enriched in the at least one oxidized sulfur containing compound and a raffinate being depleted in the at least one oxidized sulfur containing compound,
c) washing the raffinate obtained in step b) with a washing agent so as to remove remaining extracting agent from the raffinate so as to obtain a desulfurized hydrocarbon composition and a mixture of washing agent and extracting agent,
d) subjecting the extract obtained in step b) to at least one purification step so as to obtain purified extracting agent and a waste composition, wherein the purified extracting agent is at least partially recycled into step b), and
e) subjecting the mixture of washing agent and extracting agent obtained in step c) to a multi-step evaporation so as to obtain purified washing agent and extracting agent, wherein the purified washing agent is at least partially recycled into step c), and wherein the multi-step evaporation comprises at least two subsequent evaporation steps, wherein the first evaporation step is performed at a higher pressure than the at least one subsequent evaporation step.

This solution bases on the finding that by combining i) a liquid-liquid extraction of the oxidized crude hydrocarbon composition with an extracting agent with ii) a washing of the raffinate obtained in the liquid-liquid extraction with a washing agent so as to remove the extracting agent from the raffinate and with iii) a recovery of the extracting agent from the extract of the liquid-liquid extraction allowing to recycle the extracting agent into the liquid-liquid extraction and in particular with iv) a recovery of the washing agent by means of a multi-step evaporation from the mixture of washing agent and extracting agent obtained in the washing step of the raffinate, wherein the first evaporation step of the multi-step evaporation is performed at a higher pressure than the at least one subsequent evaporation step, a particular high desulfurization degree is obtained with a particular low energy consumption and with a particular low extracting agent consumption. This is, among others, due to the fact that the multi-step evaporation allows to efficiently separate the extracting agent from the washing agent in the mixture of washing agent and extracting agent obtained in the washing of the raffinate, so that in the process in accordance with the present invention very pure washing agent and very pure extracting agent are obtained, which allows to recover and recycle most of the applied washing agent into the raffinate washing step c) and to recover and recycle most of the applied extracting agent into the liquid-liquid extraction step b).

Thereby, the amount of required fresh washing agent and the amount of required fresh extracting agent are minimized. Furthermore, the multi-step evaporation, in which the first evaporation step is performed at a higher pressure than the at least one subsequent evaporation step, allows to use the vapor generated in the first evaporation step as heat source in the at least one subsequent evaporation step, thereby minimizing the energy demand for the evaporation. All in all, the process in accordance with the present invention allows to efficiently desulfurize an (oxidized) crude hydrocarbon composition containing at least one (oxidized) sulfur containing compound in an industrial scale, wherein the process is characterized by a particular low energy consumption and a particular low consumption of extracting agent, but which nevertheless leads to a purified hydrocarbon composition having a particular low sulfur content of as low as 10 ppm or even less.

In accordance with the present invention, in step a) an oxidized crude hydrocarbon composition containing at least one oxidized sulfur containing compound is provided. The oxidized crude hydrocarbon composition containing at least one oxidized sulfur containing compound may be obtained by any treatment oxidizing a sulfur containing compound in a hydrocarbon composition. Preferably, the oxidized crude hydrocarbon composition containing at least one oxidized sulfur containing compound being provided in step a) is obtained by reacting a crude hydrocarbon composition containing at least one sulfur containing compound with an oxidizing agent.

The present invention is not particularly limited concerning the kind of crude hydrocarbon composition to be desulfurized. It is in particular suitable for desulfurizing a crude hydrocarbon composition being selected from the group consisting of diesel, kerosine, gasoline, naphtha, vacuum gas oil, light cycle oil, heavy cycle oil, marine gas oil, marine diesel oil, marine fuel oil, residual fuel oil, lube oil and arbitrary combinations of two or more of the aforementioned compositions. Thus, preferably the oxidized crude hydrocarbon composition provided in step a) is preferably the oxidization product of a composition being selected from the group consisting of diesel, kerosine, gasoline, naphtha, vacuum gas oil, light cycle oil, heavy cycle oil, marine gas oil, marine diesel oil, marine fuel oil, residual fuel oil, lube oil and arbitrary combinations of two or more of the aforementioned compositions.

Also with regard to the content of sulfur containing compound, the present invention is not particularly restricted. Good results are for example achieved, if the crude hydrocarbon composition comprises 10 to 50,000 ppm and preferably 10 to 10,000 ppm of sulfur containing compound(s). Thus, it is preferred that the oxidized crude hydrocarbon composition provided in step a) comprises 10 to 50,000 ppm and preferably 10 to 10,000 ppm of oxidized sulfur containing compound(s).

A particular advantage of the process in accordance with the present invention is that it is suitable to remove virtually all sulfur containing compounds from a crude hydrocarbon composition, namely all sulfur containing compounds being - at least when using a suitable catalyst and appropriate reaction conditions - oxidizable. In particular, the process in accordance with the present invention is suitable to remove mercaptans, sulfides, disulfides, thiophenes, benzothiophenes, dibenzothiophenes, such as 4,6-dimethyldibenzothiophene, tetrahydrodibenzothiophene, tetrahydrodibenzonaphthothiophene and octahydrodinaphthothiophene, and arbitrary combinations of two or more of the aforementioned sulfur containing compounds from a crude hydrocarbon composition, so that it is preferred that the at least one sulfur containing compound being contained in the crude hydrocarbon composition is selected from the group consisting of mercaptans, sulfides, disulfides, thiophenes, benzothiophenes, dibenzothiophenes, such as 4,6-dimethyldibenzothiophene, tetrahydrodibenzothiophene, tetrahydrodibenzonaphthothiophene and octahydrodinaphthothiophene, and arbitrary combinations of two or more of the aforementioned compounds.

For the reaction with the crude hydrocarbon composition containing at least one sulfur containing compound for providing the oxidized crude hydrocarbon composition provided in step a), any oxidizing agent may be used, which is able to oxidize the sulfur containing compound(s) being contained in the crude hydrocarbon composition. Good results are in particular obtained, when the oxidizing agent used in step a) is selected from the group consisting of hydrogen peroxide, metal peroxides, metal permanganates, metal hypochlorites, metal perchlorates, metal perborates, fluorine, chlorine and arbitrary combinations of two or more of the aforementioned compounds. For instance, the oxidizing agent oxidizes the sulfur containing compound(s) to sulfones, such as butyl methyl sulfone, methyl phenyl sulfone, thiophene sulfone, benzothiophene sulfone, dibenzothiophene sulfone or 2-methyl-benzothiophene sulfone.

The process in accordance with the present invention is not particularly limited concerning the chemical nature of the extracting agent, as long as the extracting agent is able to extract oxidized sulfur compounds, such as in particular sulfones, from the hydrocarbons of a hydrocarbon composition. Good results are in particular obtained, when an aprotic and/or a polar extracting agent is used. Particular suitable extracting agents to be used in step b) are those being selected from the group consisting of methanol, acetonitrile, N-methyl-2-pyrrolidone, dimethylformamide, dimethyl sulfoxide, furfural, sulfolane and arbitrary combinations of two or more of the aforementioned compounds. Methanol is an example for a protic, polar extracting agent, whereas dimethylformamide, acetonitrile, N-methyl-2-pyrrolidone, dimethyl sulfoxide and furfural are examples for aprotic, polar extracting agents. Particularly preferably, the extracting agent is an aprotic extracting agent and most preferably an extracting agent being selected from the group consisting of methanol, acetonitrile, N-methyl-2-pyrrolidone, dimethylformamide, dimethyl sulfoxide, furfural, sulfolane and arbitrary combinations of two or more of the aforementioned compounds. Aprotic compound means in accordance with the present invention any compound, which does neither accept nor donate hydrogen ions, whereas protic compounds do. Moreover, a polar compound means in accordance with the present invention any compound, which has an electric dipole moment of at least 1.5 debye and preferably of at least 3.2 debye, wherein 1 debye corresponds to 3.33564 · 10⁻³⁰ C·m.

Preferably, the weight ratio of the amount of extracting agent divided by the amount of oxidized crude hydrocarbon composition in step b) is 0.01 to 3 and more preferably 0.1 to 1.

In accordance with a particular preferred embodiment of the present invention, the liquid-liquid extraction in step b) is performed in an agitated extraction column. Particular good results are obtained, when the liquid-liquid extraction in step b) is performed in an agitated countercurrent extraction column. Performing the liquid-liquid extraction in step b) in an agitated extraction column leads to an increased efficiency of the liquid-liquid extraction, thus allowing to minimize the amount of extracting agent being necessary for the liquid-liquid extraction.

The agitated extraction column comprises at least one and preferably a plurality, such as 2 to 80 and more preferably 5 to 40, agitated internals being disposed within the extraction column. For instance, each of the agitated internals comprises one or more rotating shafts, each of which being connected with one or more agitators being preferably selected from the group consisting of discs, blades, paddles, turbine impellers, fins and arbitrary combinations of two or more of the aforementioned agitators. In addition thereto, the agitated extraction column preferably comprises an inlet line for extracting agent, an inlet line for oxidized crude hydrocarbon composition, an outlet line for extract and an outlet line for raffinate. Preferably, the inlet line for extracting agent and the inlet line for oxidized crude hydrocarbon composition are arranged on opposite ends of the extraction column. Likewise, it is preferred that the outlet line for extract and the outlet line for raffinate are arranged on opposite ends of the extraction column, with the outlet line for extract and the inlet line for oxidized crude hydrocarbon composition being arranged on the same end of the extraction column and with the outlet line for raffinate and the inlet line for extracting agent being arranged on the same end of the extraction column.

Good results are in particular obtained, when the agitated extraction column comprises two or more compartments, which are separated from each other by static partition plates, wherein at least some and preferably all of the compartments comprise a rotating shaft comprising one or more agitators being preferably selected from the group consisting of discs, blades, paddles, turbine impellers, fins and arbitrary combinations of two or more of the aforementioned agitators.

For instance, the extraction column, in which the agitated liquid-liquid extraction is performed, may be embodied as a Kühni column and the like.

In a further development of the idea of the present invention, it is proposed that the extraction in step b) is performed as multiple stage extraction. Preferably, the multiple stage extraction comprises 6 to 12 stages. Stage means in this connection a theoretical stage, which is a thermodynamical model for stage wise mass transfer meaning that the streams leaving such a theoretical stage are in thermodynamic equilibrium. Any of these theoretical stages preferably comprises several agitated compartments of the column.

Moreover, in order to obtain a particular high efficiency of the liquid-liquid extraction being performed in step b) so as to minimize the energy demand and the required amount of extracting agent therefore, it is particularly preferred that, if an agitated extraction column with one or more rotating shafts is used in step b), the rotary speed of the rotating shaft in step b) is adjusted to 5 to 1,000 rpm and more preferably 5 to 50 rpm.

During the liquid-liquid extraction being performed in step b), a two-phase system is processed, wherein one phase is the extracting agent and the other phase is the oxidized crude hydrocarbon composition to be extracted. Usually, the phase of the extracting agent will form the continuous phase, in which droplets of the oxidized crude hydrocarbon composition are dispersed. However, it is also possible that the oxidized crude hydrocarbon composition will form the continuous phase, in which droplets of the phase of the extracting agent are dispersed. In order to obtain a particular high efficiency of the liquid-liquid extraction being performed in step b) so as to minimize the energy demand and the required amount of extracting agent therefore, it is particularly preferred that, if an agitated extraction column is used in step b), the agitated extraction column is operated so that the size of the droplets dispersed in the continuous phase is 0.5 to 10 mm and more preferably 1 to 3 mm.

In a further development of the idea of the present invention, it is suggested that in step b) an extracting agent is used so that the difference between the density of the extracting agent and the density of the oxidized crude hydrocarbon composition is 15 to 400 kg/m³. Also this assists in obtaining a particular high efficiency of the liquid-liquid extraction being performed in step b) so that the energy demand and the required amount of extracting agent therefore is minimized.

Good results are in particular obtained in terms of high efficiency of the liquid-liquid extraction being performed in step b) and in terms of minimization of the energy demand and the required amount of extracting agent therefore, when in step b) an extracting agent is used so that the interfacial tension of the extracting agent and the oxidized crude hydrocarbon composition is 0.0005 to 0.07 N/m as measured with the drop volume method using a drop volume tensiometer-DVT50 | from KRÜSS Scientific.

In accordance with a further particular preferred embodiment of the present invention, the aforementioned embodiments are combined with each other. Preferably, at least two, more preferably at least three, even more preferably at least four and most preferably all of the following five criteria are fulfilled in step b):
i) The liquid-liquid extraction is performed in an agitated extraction column comprising one or more rotating shafts, each of which comprising one or more agitators being preferably selected from the group consisting of discs, blades, paddles, turbine impellers, fins and arbitrary combinations of two or more of the aforementioned agitators, wherein the rotary speed of the rotating shaft(s) is adjusted to 5 to 1,000 rpm and more preferably 5 to 50 rpm,
ii) during the liquid-liquid extraction being performed in step b), a two-phase system is processed, wherein the extracting agent forms the continuous phase, in which droplets of the oxidized crude hydrocarbon composition are dispersed, wherein the agitated extraction column is operated so that the size of the droplets dispersed in the continuous phase is 0.5 to 10 mm and more preferably 1 to 3 mm,
iii) in step b) an extracting agent is used so that the difference between the density of the extracting agent and the density of the oxidized crude hydrocarbon composition is 15 to 400 kg/m³,
iv) in step b) an extracting agent is used so that the interfacial tension of the extracting agent and the oxidized crude hydrocarbon composition is 0.0005 to 0.07, and/or
v) in step b) an extracting agent is used having an electric dipole moment of at least 1.5 debye, preferably of at least 3.2 debye and more preferably of 3.2 to 4.2 debye.

Preferably, the raffinate obtained in step b) has a content of sulfur containing compounds of at most 25 ppm, preferably at most 20 ppm, more preferably of at most 15 ppm and most preferably of at most 10 ppm. The content of extracting agent in the raffinate obtained in step b) may be 5,000 to 100,000 ppm.

The extract obtained in step b) may have a content of 10 to 120,000 ppm of oxidized sulfur containing compound(s) and a content of at most 100,000 ppm of hydrocarbons derived from the crude hydrocarbon composition and being different from the extracting agent, if the extracting agent is a hydrocarbon or hydrocarbon containing mixture.

As washing agent in step c) any compound may be used, which has a higher solubility for extracting agent than for hydrocarbons. Good results are in particular obtained, when the washing agent used in step c) is an aqueous solution comprising at least 50% by weight of water, preferably least 80% by weight of water, more preferably least 95% by weight of water and most preferably 100% by weight of water.

Preferably, step c) is performed in an agitated column. Good results are in particular obtained, when step c) is performed in an agitated countercurrent column. All of the preferred embodiments described above for the liquid-liquid extraction column to be used for step b) are also preferable for the column to be used to perform the washing step c).

In accordance with a further particular embodiment of the present invention, steps b) and c) are performed in two different devices, such as in an extraction column and in a washing column.

However, it is also possible to perform steps b) and c) in one device. For instance, the liquid-liquid extraction unit b) and the washing unit c) may both included in one column, which comprises a first kind of compartments being separated from each other by static partition plates, wherein each of these compartments comprises a rotating shaft comprising one or more agitators being preferably selected from the group consisting of discs, blades, paddles, turbine impellers, fins and arbitrary combinations of two or more of the aforementioned agitators, and which comprises a second kind of compartments being separated from each other by static partition plates, wherein each of these compartments comprises a rotating shaft comprising one or more agitators being preferably selected from the group consisting of discs, blades, paddles, turbine impellers, fins and arbitrary combinations of two or more of the aforementioned agitators, wherein the geometry and/or dimensions of the one or more compartments and/or agitators of the first kind of compartments may be the same or may differ from those of the second kind of compartments.

As set out above, it is a particular advantage of the process in accordance with the present invention that it allows to efficiently remove sulfur containing compounds from the crude hydrocarbon composition. It is in particular preferred that the desulfurized hydrocarbon composition obtained in step c) has a content of sulfur containing compounds of at most 20 ppm and more preferably of at most 10 ppm, a content of washing agent of at most 20,000 ppm and more preferably of at most 10,000 ppm and a content of extracting agent of at most 25,000 ppm and more preferably of at most 11,000 ppm.

In accordance with the present invention in step d) the extract obtained in step b) is subjected to at least one purification step so as to obtain purified extracting agent and a waste composition, wherein the purified extracting agent is at least partially recycled into step b). Any purification technique may be used, which is able to remove impurities, such as the extracted oxidized sulfur compound(s), from the extract. A suitable example therefore is to subject the extract obtained in step b) in step d) to at least one distillation step. Good results are in particular obtained, when the extract obtained in step b) is subjected in step d) to at least two subsequent distillation steps, wherein the overheads composition obtained in the first distillation step is introduced into the subsequent distillation step, wherein the purified extracting agent is withdrawn from the subsequent distillation step as bottom composition and is at least partially recycled as extracting agent into step b).

Alternatively, a multi-step evaporation comprising at least two subsequent evaporation steps may be used in step d) as the at least one purification step. This allows to reduce the energy consumption and thus the operational costs. The multi-step evaporation used for step d) is preferably performed so as the multi-step evaporation used in step e) as described above and below. In addition to the multi-step evaporation, the at least one purification step of this embodiment may further comprise one or more, such as two, distillation steps. For instance, the liquid phase obtained in the multi-step evaporation may be distilled in a first distillation step so as to remove heavies from the composition, before the overheads composition obtained in the first distillation step is fed together with the vapor phase obtained in the multi-step evaporation to a second distillation step so as to separate residual washing agent from the extracting agent.

In accordance with the present invention in step e) the mixture of washing agent and extracting agent obtained in step c) is subjected to a multi-step evaporation for separating the extracting agent from the washing agent so as to obtain purified washing agent, wherein the multi-step evaporation comprises at least two subsequent evaporation steps, wherein the first evaporation step is performed at a higher pressure than the at least one subsequent evaporation step. Good results are in particular preferred, when the pressure difference between the pressure, at which the first evaporation step is performed, and the pressure, at which the second evaporation step is performed, is 30 to 150 kPa and more preferably 45 to 55 kPa.

Preferably, the multi-step evaporation performed in step e) comprises a first evaporation step and at least a subsequent second evaporation step, wherein the mixture of washing agent and extracting agent obtained in step c) is introduced into the first evaporation step and separated therein into a first vapor phase and a first liquid phase. The first liquid phase is introduced into the second evaporation step and separated therein into a second vapor phase and a second liquid phase, wherein the first vapor phase is used in the second evaporation step as heat source. More specifically, the evaporator, in which the second evaporation step is performed, comprises a heat exchanger, which is fed with the first vapor phase as heat source to heat the first liquid phase being introduced into the second evaporator. Also the evaporator, in which the first evaporation step is performed, preferably comprises a heat exchanger, which is fed and operated with an external heating medium. Alternatively, the heat may be provided by the vapor phase of the last column, which is recompressed by mechanical vapor recompression (MVR). While the first evaporation step is preferably performed at an absolute pressure of 200 to 400 kPa and more preferably at 250 to 300 kPa, the second evaporation step is preferably performed at an absolute pressure of 100 to 250 kPa and more preferably at an absolute pressure of 160 to 230 kPa, such as at about 170 kPa. Again, preferably the pressure difference between the pressure, at which the first evaporation step is performed, and the pressure, at which the second evaporation step is performed, is 30 to 150 kPa and more preferably 45 to 55 kPa. The temperature of the liquid during the first evaporation step is preferably 130 to 140°C, whereas the temperature of the liquid during the second evaporation step is preferably 110 to 130°C. If the second evaporation step is the last evaporation step of the multi-step evaporation performed in step e), at least a portion of the second liquid phase is recycled as washing agent into step c) or used as heat source in the first evaporation step.

Furthermore, it is preferred that between the first and second evaporation step the first vapor phase is compressed, before it is used as heat source in the second evaporation step, i.e. before it is fed into the heat exchanger of the evaporator, in which the second evaporation step is performed. For this purpose, any kind of compression may be used, wherein preferably a mechanical vapor recompression (MVR) is performed.

In a further development of the idea of the present invention, it is proposed that the multi-step evaporation performed in step e) further comprises at least a subsequent third evaporation step, wherein the second liquid phase is introduced into the third evaporation step and separated therein into a third vapor phase and a third liquid phase, wherein the second vapor phase is used in the third evaporation step as heat source. More specifically, the evaporator, in which the third evaporation step is performed, comprises a heat exchanger, which is fed with the second vapor phase as heat source to heat the second liquid phase being introduced into the third evaporator. Preferably, the third evaporation step is performed at an absolute pressure of 50 to 150 kPa and more preferably at an absolute pressure of 70 to 130 kPa, such as at about 80 kPa. Good results are in particular preferred, when the pressure difference between the pressure, at which the second evaporation step is performed, and the pressure, at which the third evaporation step is performed, is 50 to 150 kPa and preferably 90 to 100 kPa. The temperature of the liquid during the third evaporation step is preferably 90 to 130°C. If the third evaporation step is the last evaporation step of the multi-step evaporation performed in step e), at least a portion of the third liquid phase is recycled as washing agent into step c) or used as heat source in the first evaporation step.

Also in this embodiment, it is preferred that between the second and third evaporation step the second vapor phase is compressed, before it is used as heat source in the third evaporation step, i.e. before it is fed into the heat exchanger of the evaporator, in which the third evaporation step is performed. For this purpose, any kind of compression may be used, wherein preferably a mechanical vapor recompression (MVR) is performed.

Furthermore, it is preferred that the multi-step evaporation performed in step e) further comprises at least a subsequent fourth evaporation step, wherein the third liquid phase is introduced into the fourth evaporation step and separated therein into a fourth vapor phase and a fourth liquid phase, wherein the third vapor phase is used in the fourth evaporation step as heat source. More specifically, the evaporator, in which the fourth evaporation step is performed, comprises a heat exchanger, which is fed with the third vapor phase as heat source to heat the third liquid phase being introduced into the fourth evaporator. Preferably, the fourth evaporation step is performed at an absolute pressure of 10 to 30 kPa and more preferably at an absolute pressure of 15 to 25 kPa, such as at about 20 kPa. Good results are in particular preferred, when the pressure difference between the pressure, at which the third evaporation step is performed, and the pressure, at which the fourth evaporation step is performed, is 30 to 80 kPa and preferably 50 to 60 kPa. The temperature of the liquid during the fourth evaporation step is preferably 60 to 80°C. If the fourth evaporation step is the last evaporation step of the multi-step evaporation performed in step e), at least a portion of the fourth liquid phase is recycled as washing agent into step c) or used as heat source in the first evaporation step.

Also in this embodiment, it is preferred that between the third and fourth evaporation step the third vapor phase is compressed, before it is used as heat source in the fourth evaporation step, i.e. before it is fed into the heat exchanger of the evaporator, in which the fourth evaporation step is performed. For this purpose, any kind of compression may be used, wherein preferably a mechanical vapor recompression (MVR) is performed.

In accordance with a further aspect, the present invention is related to a plant for desulfurizing a crude hydrocarbon composition, such as diesel or kerosine, wherein the plant comprises:
a) a liquid-liquid extraction unit comprising an inlet line for oxidized crude hydrocarbon composition, an inlet line for extracting agent, an outlet line for extract and an outlet line for raffinate,
b) a washing unit comprising an inlet line for raffinate being connected with the outlet line for raffinate of the liquid-liquid extraction unit a), an inlet line for washing agent, an outlet line for desulfurized hydrocarbon composition and an outlet line for a mixture of washing agent and extracting agent,
c) an extracting agent recovering unit comprising an inlet line for extract being connected with the outlet line for extract of the liquid-liquid extraction unit a), an outlet line for waste composition and an outlet line for purified extracting agent, which is connected with the inlet line for extracting agent of the liquid-liquid extraction unit, and
d) a multi-step evaporation unit comprising an inlet line for a mixture of washing agent and extracting agent being connected with the outlet line for a mixture of washing agent and extracting agent of the washing unit b), an outlet line for extracting agent and an outlet line for purified washing agent, wherein the outlet line for purified washing agent is connected with the inlet line for washing agent of the washing unit b), and wherein the multi-step evaporation unit comprises at least two evaporators.

Preferably, the inlet line for oxidized crude hydrocarbon composition of the liquid-liquid extraction unit is connected with the outlet line for oxidized crude hydrocarbon composition of a reactor, wherein the reactor further comprises an inlet line for crude hydrocarbon composition as well as an inlet line for oxidizing agent.

The liquid-liquid extraction unit a) and the washing unit b) may be two separate units.

In accordance with a particular preferred embodiment of the present invention, the liquid-liquid extraction unit a) and/or washing unit b) comprise(s) at least one agitated extraction column and preferably an agitated countercurrent extraction column. For instance, the agitated extraction column comprises one or more rotating shafts, each of which comprising one or more agitators being preferably selected from the group consisting of discs, blades, paddles, turbine impellers, fins and arbitrary combinations of two or more of the aforementioned agitators.

In a further development of the idea of the present invention, it is suggested that the agitated extraction column of the liquid-liquid extraction unit a) and/or of the washing unit b) comprises two or more compartments, which are separated from each other by static partition plates, wherein at least some and preferably all of the compartments comprise a rotating shaft comprising one or more agitators being preferably selected from the group consisting of discs, blades, paddles, turbine impellers, fins and arbitrary combinations of two or more of the aforementioned agitators.

Good results are in particular obtained, if the agitated extraction column comprises two or more compartments, which are separated from each other by static partition plates, wherein at least some and preferably all of the compartments comprise a rotating shaft comprising one or more agitators being preferably selected from the group consisting of discs, blades, paddles, turbine impellers, fins and arbitrary combinations of two or more of the aforementioned agitators.

In accordance with an alternative embodiment, the liquid-liquid extraction unit a) and the washing unit b) may be comprised in one device.

In this embodiment, it is preferred that the liquid-liquid extraction unit a) and the washing unit b) are both included in one column, which comprises a first kind of compartments being separated from each other by static partition plates, wherein each of these compartments comprises a rotating shaft comprising one or more agitators being preferably selected from the group consisting of discs, blades, paddles, turbine impellers, fins and arbitrary combinations of two or more of the aforementioned agitators, and which comprises a second kind of compartments being separated from each other by static partition plates, wherein each of these compartments comprises a rotating shaft comprising one or more agitators being preferably selected from the group consisting of discs, blades, paddles, turbine impellers, fins and arbitrary combinations of two or more of the aforementioned agitators, wherein the geometry and/or dimensions of the one or more compartments and/or agitators of the first kind of compartments differs from those of the second kind of compartments. Alternatively, the geometry and/or dimensions of the one or more compartments and/or agitators of the first kind of compartments are the same than those of the second kind of compartments.

The extracting agent recovering unit c) preferably comprises one distillation column and more preferably two or more distillation columns.

Alternatively, the extracting agent recovering unit c) may comprise a multi-step evaporation unit. This allows to reduce the energy consumption and thus the operational costs. The multi-step evaporation unit comprises at least two evaporators and preferably further comprises an inlet line for extract being connected with the outlet line for extract of the liquid-liquid extraction unit a), an outlet line for waste composition and an outlet line for extracting agent. In addition, the extracting agent recovering unit c) may comprise one or more, such as two, distillation columns, wherein preferably each of which is connected with one or both of the outlet lines of the multi-step evaporation unit. The multi-step evaporation unit comprised in the extracting agent recovering unit c) is preferably embodied so as the multi-step evaporation unit d) as described above and below.

In accordance with a particular preferred embodiment of the present invention, the multi-step evaporation unit d) comprises a first evaporator and at least a subsequent second evaporator, wherein the first evaporator comprises an inlet line being connected with the outlet line for a mixture of washing agent and extracting agent of the washing unit b), an outlet line for a liquid phase and an outlet line for a vapor phase, wherein the second evaporator comprises an inlet line being connected with the outlet line for a liquid phase of the first evaporator, a heat exchanger being connected with the outlet line for a vapor phase of the first evaporator, an outlet line for a liquid phase and an outlet line for a vapor phase, wherein, if the multi-step evaporation unit does not comprise any further subsequent evaporator, the outlet line for a liquid phase (which is then the outlet line for purified washing agent of the multi-step evaporation unit) of the second evaporator is connected with the inlet line for washing agent of the washing unit b). Also the first evaporator preferably comprises an heat exchanger.

Preferably, a compressor is arranged between the first evaporator and the subsequent second evaporator, wherein the inlet line of the compressor is connected with the outlet line for a vapor phase of the first evaporator and the outlet line of the compressor is connected with the inlet line of the heat exchanger of the second evaporator, so that the vapor phase leaving the first evaporator is compressed, before it is fed into the heat exchanger of the second evaporator.

In a further development of the idea of the present invention, it is proposed that the multi-step evaporation unit d) further comprises at least a subsequent third evaporator, wherein the third evaporator comprises an line being connected with the outlet line for a liquid phase of the second evaporator, a heat exchanger being connected with the outlet line for a vapor phase of the second evaporator, an outlet line for a liquid phase and an outlet line for a vapor phase, wherein, if the multi-step evaporation unit does not comprise any further subsequent evaporator, the outlet line for a liquid phase (which is then the outlet line for purified washing agent of the multi-step evaporation unit) of the third evaporator is connected with the inlet line for washing agent of the washing unit b).

It is also preferred in this embodiment that a compressor is arranged between the second evaporator and the subsequent third evaporator, wherein the inlet line of the compressor is connected with the outlet line for a vapor phase of the second evaporator and the outlet line of the compressor is connected with the inlet line of the heat exchanger of the third evaporator, so that the vapor phase leaving the second evaporator is compressed, before it is fed into the heat exchanger of the third evaporator.

Good results are in particular obtained, when the multi-step evaporation unit d) further comprises at least a subsequent fourth evaporator, wherein the fourth evaporator comprises an inlet line being connected with the outlet line for a liquid phase of the third evaporator, a heat exchanger being connected with the outlet line for a vapor phase of the third evaporator, an outlet line for a liquid phase and an outlet line for a vapor phase, wherein, if the multi-step evaporation unit does not comprise any further subsequent evaporator, the outlet line for a liquid phase (which is then the outlet line for purified washing agent of the multi-step evaporation unit) of the fourth evaporator is connected with the inlet line for washing agent of the washing unit b).

It is also preferred in this embodiment that a compressor is arranged between the third evaporator and the subsequent fourth evaporator, wherein the inlet line of the compressor is connected with the outlet line for a vapor phase of the third evaporator and the outlet line of the compressor is connected with the inlet line of the heat exchanger of the fourth evaporator, so that the vapor phase leaving the third evaporator is compressed, before it is fed into the heat exchanger of the fourth evaporator.

Preferably, the heat exchanger of each evaporator of the multi-step evaporation unit d) comprises an inlet line for the vapor phase and an outlet line for the vapor and/or liquid phase, whereas the outlet lines for the vapor and/or liquid phase of all heat exchangers of the multi-step evaporation unit d) are combined to the outlet line for washing agent of the multi-step evaporation unit.

Moreover, it is preferred that the outlet line for extracting agent of the multi-step evaporation unit is connected with the inlet line of a distillation column, which further comprises an outlet line being connected with an inlet line of the extracting agent recovering unit c) and an outlet line being connected with the inlet line for washing agent of the washing unit b).

Subsequently, the present invention is described by means of an illustrative, but not limiting figure, in which:
- Fig. 1: is a schematic view of a plant for desulfurizing a crude hydrocarbon composition in accordance with one embodiment of the present invention.
- Fig. 2: is a schematic view of the multi-step evaporation unit of the plant shown in figure 1.
- Fig. 3a and 3b: are schematic length-sectional views of a part of the liquid-liquid extraction unit of the plant shown in figure 1.
- Fig. 4: is a schematic view of a plant for desulfurizing a crude hydrocarbon composition in accordance with another embodiment of the present invention.
- Fig. 5: is a schematic view of a plant for desulfurizing a crude hydrocarbon composition in accordance with another embodiment of the present invention.

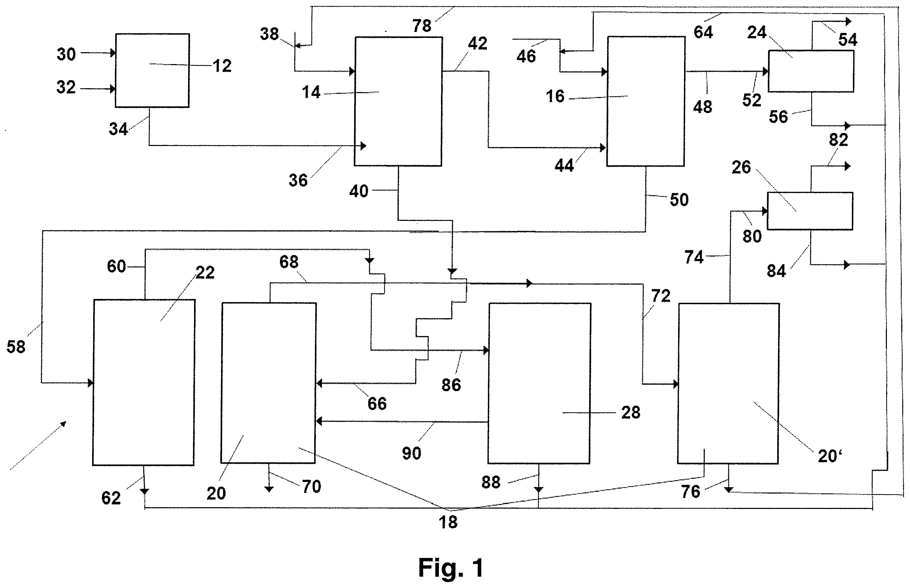

The plant 10 for desulfurizing a crude hydrocarbon composition shown in figure 1 comprises a reactor 12 for reacting a crude hydrocarbon composition containing at least one sulfur containing compound with an oxidizing agent, a liquid-liquid extraction unit 14 for subjecting the oxidized crude hydrocarbon composition obtained in the reactor 12 to a liquid-liquid extraction with an extracting agent, a washing unit 16 for washing the raffinate obtained in the liquid-liquid extraction unit 14, an extracting agent recovering unit 18 comprising two distillation columns 20, 20' for recovering the extracting agent from the extract obtained in liquid-liquid extraction unit 14 and a multi-step evaporation unit 22 for separating extracting agent from washing agent. In addition, the plant 10 comprises two liquid-liquid separators 24, 26 and a distillation column 28 for recovering washing agent.

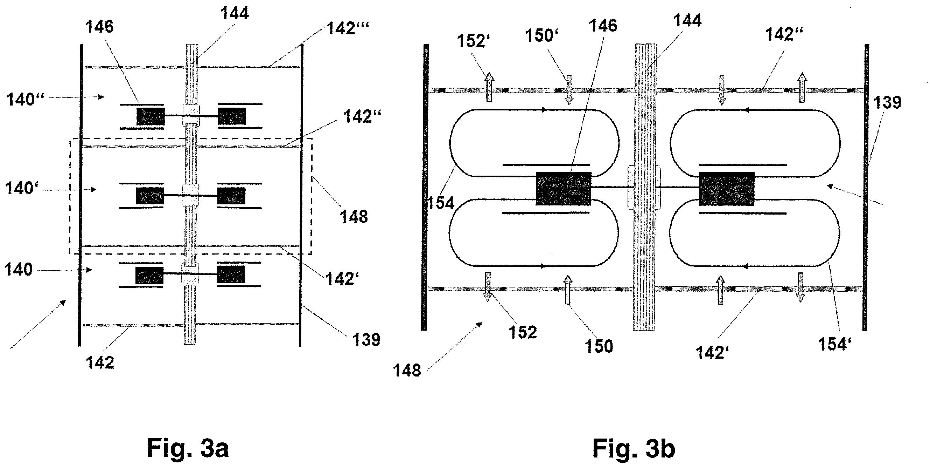

More specifically, the reactor 12 comprises an inlet line 30 for crude hydrocarbon composition, an inlet line 32 for oxidizing agent and an outlet line 34 for oxidized crude hydrocarbon composition. Moreover, the liquid-liquid extraction unit 14 comprises an inlet line 36 for oxidized crude hydrocarbon composition being connected with the outlet line 34 for oxidized crude hydrocarbon composition of the reactor 12, an inlet line 38 for extracting agent, an outlet line 40 for extract and an outlet line 42 for raffinate. In turn, the washing unit 16 comprises an inlet line 44 for raffinate being connected with the outlet line 42 for raffinate of the liquid-liquid extraction unit 14, an inlet line 46 for washing agent, an outlet line 48 for desulfurized hydrocarbon composition and an outlet line 50 for a mixture of washing agent and extracting agent. While the outlet line 48 for desulfurized hydrocarbon composition leads to an inlet line 52 of the liquid-liquid separator 24, which comprises a product outlet line 54 for desulfurized hydrocarbon composition and an outlet line 56 for washing agent, the outlet line 50 for a mixture of washing agent and extracting agent of the washing unit 16 leads into the multi-step evaporation unit 22. More specifically, the multi-step evaporation unit 22 comprises an inlet line 58 for a mixture of washing agent and extracting agent being connected with the outlet line 50 for a mixture of washing agent and extracting agent of the washing unit 16, an outlet line 60 for extracting agent and an outlet line 62 for washing agent. As shown in further detail in figure 3, the multi-step evaporation unit 22 comprises four evaporators. Moreover, the outlet line 62 for washing agent of the multi-step evaporation unit 22 as well as the outlet line 56 for washing agent of the liquid-liquid separator 24 are connected with a recycle line 64 for washing agent, which leads into the inlet line 46 for washing agent of the washing unit 16.

The outlet line 40 for extract of the liquid-liquid extraction unit 14 leads into the first distillation column 20 of the extracting agent recovering unit 18. More specifically, the first distillation column 20 comprises an inlet line 66 for extract, which is connected with the outlet line 40 for extract of the liquid-liquid extraction unit 14, and further comprises an outlet line 68 for extracting agent and an outlet line 70 for waste. While the outlet line 70 for waste leads out of the plant 10, the outlet line 68 for extracting agent is connected with the second distillation column 20' of the extracting agent recovering unit 18. More specifically, the second distillation column 20' comprises an inlet line 72 for extracting agent, which is connected with the outlet line 68 for extracting agent of the first distillation column 20, and further comprises an outlet line 74 for a washing agent enriched stream and an outlet line 76 for extracting agent, wherein the outlet line 76 for extracting agent is connected with a recycle line 78 for extracting agent, which leads into the inlet line 38 for extracting agent of the liquid-liquid extraction unit 14. The outlet line 74 for a washing agent enriched stream of the second distillation column 20' leads to an inlet line 80 of the liquid-liquid separator 26, which comprises an outlet line 82 for waste and an outlet line 84 for washing agent, which is connected with the recycle line 64 for washing agent, which leads into the inlet line 46 for washing agent of the washing unit 16.

Finally, the outlet line 60 for extracting agent of the multi-step evaporation unit 22 is connected with an inlet line 86 of the distillation column 28 for further recovering washing agent remaining in the extracting agent, wherein the distillation column 28 for recovering washing agent further comprises an outlet line 88 for washing agent and an outlet line 90 for extracting agent. While the outlet line 88 for washing agent is connected with the recycle line 64 for washing agent, which leads into the inlet line 46 for washing agent of the washing unit 16, the outlet line 90 for extracting agent leads into the first distillation column 20 of the extracting agent recovering unit 18.

During the operation of the plant 10, crude hydrocarbon composition, such as diesel fuel, containing sulfur containing compounds, such as thiophenes, is fed via line 30 together with an oxidizing agent into the reactor 12, in which the sulfur containing compounds are oxidized mainly to sulfones. The so obtained oxidized crude hydrocarbon composition is fed via lines 34, 36 into the liquid-liquid extraction unit, into which via line 38 also extracting agent is fed. During the liquid-liquid extraction, the oxidized sulfur containing compounds are dissolved in the extracting agent and thereby removed from the hydrocarbons of the crude hydrocarbon composition so that an extract being enriched in the oxidized sulfur containing compound as well as a raffinate being depleted in the oxidized sulfur containing compounds are obtained. While the extract is led via lines 40, 66 into the first distillation column of the extracting agent recovering unit 18, the raffinate is led via lines 42, 44 into the washing unit 16, in which the raffinate, which contains some of the extracting agent as impurity, is washed with a washing agent, such as water, being fed into the washing unit 16 via the inlet line 46 in order to remove the extracting agent from the raffinate. Thereby, the extracting agent is dissolved in the washing agent so that in the washing unit 16 a desulfurized hydrocarbon composition and a mixture of washing agent and extracting agent are obtained. While the mixture of washing agent and extracting agent is withdrawn from the washing unit 16 via line 50, the desulfurized hydrocarbon composition is withdrawn from the washing unit 16 via outlet line 48 and led via inlet line 52 into the liquid-liquid separator 24, in which remaining washing agent is separated by gravitational force from the hydrocarbon so that purified, desulfurized hydrocarbon composition is withdrawn as product from the liquid-liquid separator 24 via outlet line 54 and washing agent is withdrawn from the liquid-liquid separator 24 via outlet line 56. The withdrawn washing agent is recycled via the recycle line 64 into the inlet line 46 for washing agent and from there into the washing unit 16. The mixture of washing agent and extracting agent being withdrawn from the washing unit 16 via outlet line 50 is led via inlet line 58 into the multi-step evaporation unit 22, in which the extracting agent is separated from the washing agent so as to obtain recovered washing agent and extracting agent. While the washing agent is at least partially recycled via lines 62, 64, 46 into the washing unit 16, the extracting agent is led via lines 60, 86 into the distillation column 28, where the extracting agent is further separated from the remaining washing agent. While the so obtained washing agent is recycled via lines 88, 64, 46 into the washing unit 16, the remaining extracting agent is led via line 90 into the first distillation column 20 of the extracting agent recovering unit 18. Also the extract obtained in the liquid-liquid extraction step being performed in the liquid-liquid extraction column 14 is led via lines 40, 66 into the first distillation column 20 of the extracting agent recovering unit 18, in which compounds having a higher boiling point than the extracting agent are obtained as bottom waste composition, which is withdrawn from the plant 10 via outlet line 70, whereas the extracting agent is led via lines 68, 72 into the second distillation column 20' of the extracting agent recovering unit 18. Therein, washing agent and other compounds having a lower boiling point than the extracting agent are separated from the extracting agent and obtained as overheads stream being withdrawn from the second distillation column 20' via line 74, whereas the recovered extracting agent is obtained as bottom stream and is recycled via lines 76, 78, 38 into the liquid-liquid extraction column 14. Finally, the overheads stream being withdrawn from the second distillation column 20' of the extracting agent recovering unit 18 via line 74 is led via inlet line 80 into the liquid-liquid separator 26, in which washing agent is separated by means of gravitational force from lighter waste. While the lighter waste is withdrawn from the plant 10 via outlet line 82, the so obtained washing agent is led via lines 84, 64, 46 into the washing unit 16.

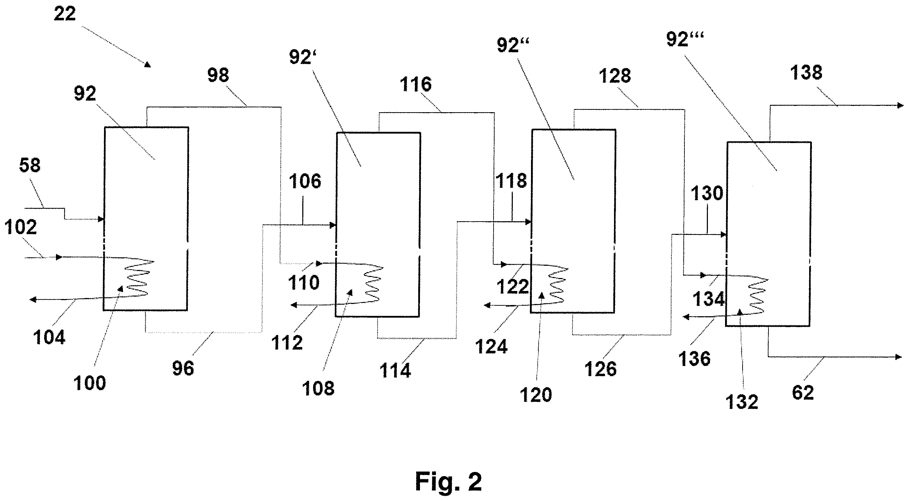

The multi-step evaporation unit 22 of the plant 10 shown in figure 1 is shown in more detail in figure 2. Accordingly, the multi-step evaporation unit 22 comprises four evaporators 92, 92', 92", 92'". The first evaporator 92 comprises an inlet line 58 being connected with the outlet line 50 for a mixture of washing agent and extracting agent of the washing unit 16, an outlet line for liquid phase 96, an outlet line for vapor phase 98 and a heat exchanger 100, wherein the heat exchanger 100 comprises an inlet 102 and an outlet 104 for external heating medium. The second evaporator 92' comprises an inlet line 106 being connected with the outlet line 96 for liquid phase of the first evaporator 92, a heat exchanger 108 comprising an inlet line 110 being connected with the outlet line 98 for vapor phase of the first evaporator and an outlet line 112, wherein the second evaporator 92' further comprises an outlet line 114 for liquid phase and an outlet line 116 for vapor phase. Likewise, the third evaporator 92" comprises an inlet line 118 being connected with the outlet line 114 for liquid phase of the second evaporator 92', a heat exchanger 120 comprising an inlet line 122 being connected with the outlet line 116 for vapor phase of the second evaporator and an outlet line 124, wherein the third evaporator 92" further comprises an outlet line 126 for liquid phase and an outlet line 128 for vapor phase. Analogous, the fourth evaporator 92‴ comprises an inlet line 130 being connected with the outlet line 126 for liquid phase of the third evaporator 92", a heat exchanger 132 comprising an inlet line 134 being connected with the outlet line 128 for vapor phase of the third evaporator 92" and an outlet line 136, wherein the fourth evaporator 92‴ further comprises the outlet line 62 for a washing agent and an outlet line 138 for vapor phase. As set out above, the outlet line 62 for washing agent is connected via lines 62, 64, 46 with the inlet of the washing unit 16. Upstream of the inlet lines of the second to fourth evaporator 92', 92", 92'", namely in inlet lines 110, 122, 134, a compressor (not shown) may be arranged, in order to compress the vapor before fed into the downstream heat exchanger 108, 120, 132.

During the operation of the multi-step evaporation unit 22, the mixture of washing agent and extracting agent obtained in the washing step being performed in the washing unit 16 is fed via inlet line 58 into the first evaporator 92, where the mixture is partially evaporated due to the heat introduced by the heat exchanger 100 so as to form a vapor phase of mainly extracting agent and liquid phase of washing agent and remaining extracting agent. While the liquid phase is withdrawn from the first evaporator 92 via outlet line 96 and is introduced via inlet line 106 into the second evaporator 92', the vapor phase is withdrawn from the first evaporator 92 via outlet line 98 and fed via inlet line 110 into the heat exchanger 108 so as to heat the liquid phase contained in the second evaporator 92'. While the liquid phase is withdrawn from the second evaporator 92' via outlet line 114 and is introduced via inlet line 118 into the third evaporator 92", the vapor phase is withdrawn from the second evaporator 92' via outlet line 116 and fed via inlet line 122 into the heat exchanger 120 so as to heat the liquid phase contained in the third evaporator 92". While the liquid phase is withdrawn from the third evaporator 92" via outlet line 126 and is introduced via inlet line 130 into the fourth evaporator 92'", the vapor phase is withdrawn from the third evaporator 92" via outlet line 128 and fed via inlet line 134 into the heat exchanger 132 so as to heat the liquid phase contained in the fourth evaporator 92'". While the first evaporation step is performed at 200 to 400 kPa, the second evaporation step is performed at an absolute pressure of 100 to 150 kPa, the third evaporation step is performed at an absolute pressure of 50 to 150 kPa and the fourth evaporation step is performed at an absolute pressure of 10 to 30 kPa. The liquid phase or washing agent, respectively, obtained in the fourth evaporator 92‴ and withdrawn therefrom via line 62 is recycled as washing agent into the washing step being performed in the washing unit 16.

Figures 3a and 3b show schematically length-sectional views of a part of the liquid-liquid extraction column 14 or liquid-liquid extraction unit 14, respectively, of the plant 10 shown in figure 1. The liquid-liquid extraction unit 14 is margined by a wall 139 and comprises a plurality of compartments 140, 140', 140", from which three are shown in figure 3a and one is shown in figure 3b. Each of the compartments 140, 140', 140" is separated from adjacent compartments 140, 140', 140" by means of a static partition plate 142, 142', 142", 142'". Each of the static partition plates 142, 142', 142", 142‴ is perforated (not shown), i.e. comprises several holes allowing liquid to pass from one side of the partition plate 142, 142', 142", 142‴ to the other. Furthermore, the liquid-liquid extraction unit 14 comprises a rotating shaft 144 extending through each of the compartments 140, 140', 140" and being arranged, seen in the length section, in the center of the compartments 140, 140', 140". The rotating shaft 144 comprises several turbine impellers as agitators 146, wherein each compartment 140, 140', 140" comprises two agitators 146.

As shown in more detail in figure 3b, which shows the section of the liquid-liquid extraction column 14 highlighted in the box 148 of figure 3a, during the operation of the liquid-liquid extraction column 14 oxidized crude hydrocarbon composition flows in the direction of arrows 150, 152' through the liquid-liquid extraction column 14 , whereas the extracting agent flows in the counter-direction as indicated by the arrows 152, 150'. The mixture of oxidized crude hydrocarbon composition and extracting agent is agitated through the rotating agitators 146, wherein a rapid flow in the length direction is restricted by the perforated partition plates 142, 142', 142", so that, seen in the length-section, an oval flow pattern as shown by the arrows 154, 154' is generated. Thereby an intimate contact between the oxidized crude hydrocarbon composition and the extracting agent is achieved leading to a particular efficient extraction of oxidized sulfur containing compounds from the hydrocarbon composition into the extracting agent.

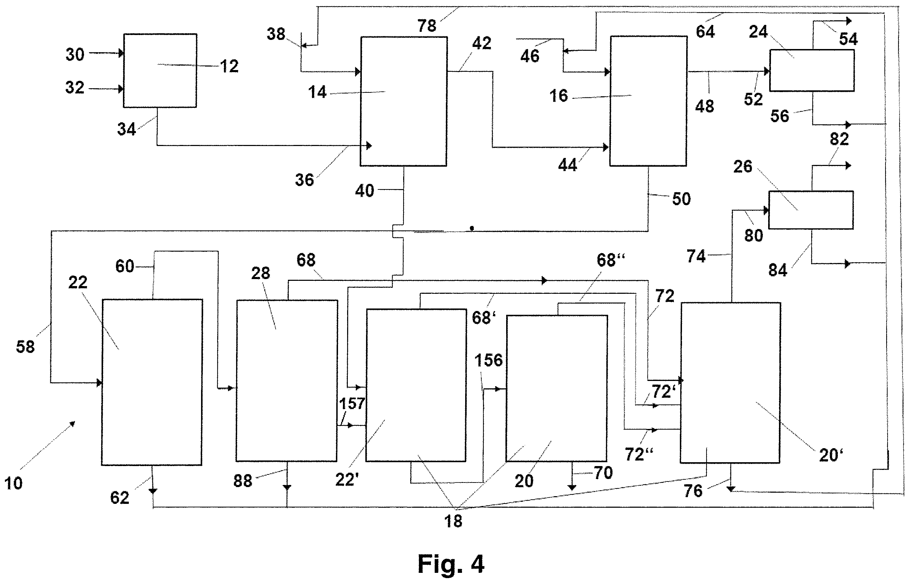

The plant 10 for desulfurizing a crude hydrocarbon composition shown in figure 4 corresponds to that shown in figure 1 except that the extracting agent recovering unit 18 does not only comprise two distillation columns, but in addition a multi-stage evaporation unit 22'. During the operation of the plant 10, the extract being withdrawn from the liquid-liquid extraction unit 14 via outlet line 40 is led into the multi-stage evaporation unit 22' and separated therein into a liquid phase and into a vapor phase. The liquid phase is withdrawn from the multi-stage evaporation unit 22' and fed via connection line 156 into the first distillation column 20, in which the liquid phase is separated into a bottom composition comprising heavy components and into an overheads composition containing extracting agent and water. The overheads composition is led via lines 68", 72" into the second distillation column 20', whereas the bottom composition is withdrawn from the first distillation column 20 via the waste line 70. The vapor phase is withdrawn from the multi-stage evaporation unit 22' and led via lines 68', 72' into the second distillation column 20'.

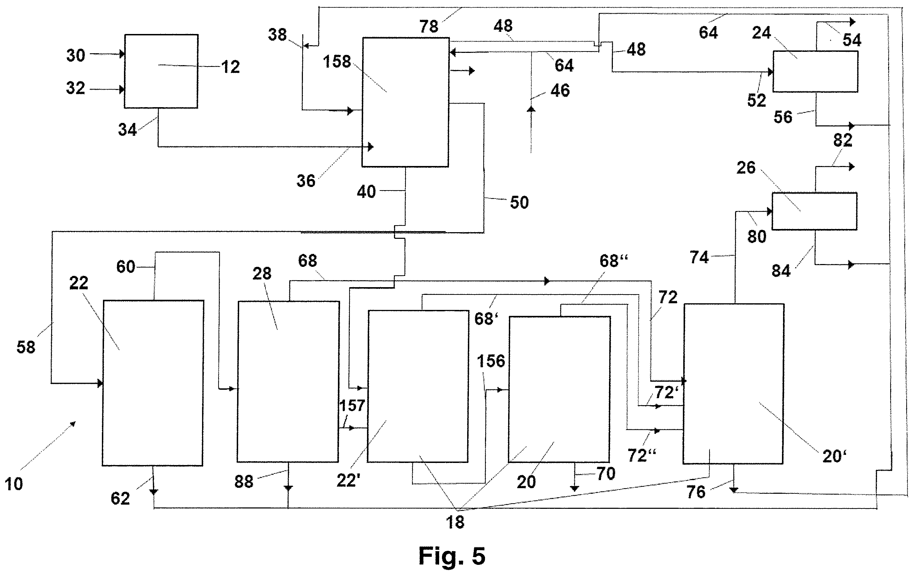

The plant 10 for desulfurizing a crude hydrocarbon composition shown in figure 5 corresponds to that shown in figure 4 except that the liquid-liquid extraction unit 14 and the washing unit 16 are combined in one column 158. The column 158 comprises (not shown) a first kind of compartments being separated from each other by static partition plates, wherein each of these compartments comprises a rotating shaft comprising one or more agitators being preferably selected from the group consisting of discs, blades, paddles, turbine impellers, fins and arbitrary combinations of two or more of the aforementioned agitators, and a second kind of compartments being separated from each other by static partition plates, wherein each of these compartments comprises a rotating shaft comprising one or more agitators being preferably selected from the group consisting of discs, blades, paddles, turbine impellers, fins and arbitrary combinations of two or more of the aforementioned agitators, wherein the geometry and/or dimensions of the one or more compartments and/or agitators of the first kind of compartments differs from those of the second kind of compartments. During the operation of the plant 10, oxidized crude hydrocarbon composition is fed via inlet line 36 into the bottom part of the combined liquid-liquid extraction unit and washing unit 158 and is led upwardly through the whole combined liquid-liquid extraction unit and washing unit 158, from which it is withdrawn via outlet line 48 and led therefrom via the inlet line 52 into the liquid-liquid separator 24. Extracting agent is fed into the middle part of the combined liquid-liquid extraction unit and washing unit 158 via inlet line 38 and is led in counter-direction to the oxidized crude hydrocarbon composition to the bottom of the combined liquid-liquid extraction unit and washing unit 158, from which the consumed extracting agent is withdrawn via the outlet line 40. During the liquid-liquid extraction as consequence of the flow of the oxidized crude hydrocarbon composition upwardly from the inlet of the oxidized crude hydrocarbon composition to the bottom part of the combined liquid-liquid extraction unit and washing unit 158 and the inlet of the extracting agent in the middle part of the combined liquid-liquid extraction unit and washing unit 158, the oxidized sulfur containing compounds are removed from the oxidized crude hydrocarbon composition, which is obtained at the middle part of the combined liquid-liquid extraction unit as raffinate. The so obtained raffinate flows further upwardly through the combined liquid-liquid extraction unit and washing unit 158, where it is contacted with the washing agent, which is fed into the upper part of the combined liquid-liquid extraction unit and washing unit 158 via inlet lines 46, 64 and is led in counter-direction to the raffinate upwardly through the combined liquid-liquid extraction unit and washing unit 158. Thereby, traces of extracting agent are removed from the raffinate so as to obtain the desulfurized hydrocarbon composition, which is removed from the combined liquid-liquid extraction unit and washing unit 158 via outlet line 48, whereas the mixture of washing agent and extracting agent is withdrawn from the combined liquid-liquid extraction unit and washing unit 158 via outlet line 50. The outlet line 50 is arranged at a location being just above the inlet for extracting agent 38.

### Reference numerals

- 10: Plant
- 12: Reactor
- 14: Liquid-liquid extraction unit
- 16: Washing unit
- 18: Extracting agent recovering unit
- 20, 20': Distillation column of the extracting agent recovering unit
- 22, 22': Multi-step evaporation unit
- 24: Liquid-liquid separator
- 26: Liquid-liquid separator
- 28: Distillation column for recovering washing agent
- 30: Inlet line for crude hydrocarbon composition
- 32: Inlet line for oxidizing agent
- 34: Outlet line for oxidized crude hydrocarbon composition
- 36: Inlet line for oxidized crude hydrocarbon composition
- 38: Inlet line for extracting agent
- 40: Outlet line for extract
- 42: Outlet line for raffinate
- 44: Inlet line for raffinate
- 46: Inlet line for washing agent
- 48: Outlet line for desulfurized hydrocarbon composition
- 50: Outlet line for a mixture of washing agent and extracting agent
- 52: Inlet line of the liquid-liquid separator 24
- 54: Product outlet line for desulfurized hydrocarbon composition
- 56: Outlet line for washing agent
- 58: Inlet line for a mixture of washing agent and extracting agent
- 60: Outlet line for extracting agent
- 62: Outlet line for washing agent
- 64: Recycle line for washing agent
- 66: Inlet line for extract
- 68, 68', 68": Outlet line for extracting agent
- 70: Outlet line for waste
- 72, 72', 72": Inlet line for extracting agent
- 74: Outlet line for a washing agent enriched stream
- 76: Outlet line for extracting agent
- 78: Recycle line for recovered extracting agent
- 80: Inlet line of the liquid-liquid separator 28
- 82: Outlet line for waste
- 84: Outlet line for washing agent
- 86: Inlet line of the distillation column for recovering washing agent
- 88: Outlet line for washing agent
- 90: Outlet line for extracting agent
- 92, 92', 92", 92‴: Evaporator of the multi-step evaporation unit
- 96: Outlet line for liquid phase of first evaporator
- 98: Outlet line for vapor phase of first evaporator
- 100: Heat exchanger of first evaporator
- 102: Inlet line of heat exchanger of first evaporator
- 104: Outlet line of heat exchanger of first evaporator
- 106: Inlet line of second evaporator
- 108: Heat exchanger of second evaporator
- 110: Inlet line of heat exchanger of second evaporator
- 112: Outlet line of heat exchanger of second evaporator
- 114: Outlet line for liquid phase of second evaporator
- 116: Outlet line for vapor phase of second evaporator
- 118: Inlet line of third evaporator
- 120: Heat exchanger of third evaporator
- 122: Inlet line of heat exchanger of third evaporator
- 124: Outlet line of heat exchanger of third evaporator
- 126: Outlet line for liquid phase of third evaporator
- 128: Outlet line for vapor phase of third evaporator
- 130: Inlet line of fourth evaporator
- 132: Heat exchanger of fourth evaporator
- 134: Inlet line of heat exchanger of fourth evaporator
- 136: Outlet line of heat exchanger of fourth evaporator
- 138: Outlet line for vapor phase of fourth evaporator
- 139: Wall of liquid-liquid extraction unit
- 140, 140', 140": Compartments of liquid-liquid extraction unit
- 142, 142', 142", 142‴: Static partition plate
- 144: Rotating shaft
- 146: Agitators
- 148: Part of the liquid-liquid extraction unit shown in figure 3b
- 150, 152': Arrow showing the flow direction of the oxidized crude hydrocarbon composition
- 152, 150': Arrow showing the flow direction of the extracting agent
- 154, 154': Arrow showing flow pattern in the compartment
- 156: Connection line
- 157: Outlet line
- 158: Combined liquid-liquid extraction unit and washing unit

## Claims

1. A process for desulfurizing a crude hydrocarbon composition, such as diesel or kerosine, wherein the process comprises the following steps:
a) providing an oxidized crude hydrocarbon composition containing at least one oxidized sulfur containing compound,
b) subjecting the oxidized crude hydrocarbon composition provided in step a) to a liquid-liquid extraction with an extracting agent so as to obtain an extract being enriched in the at least one oxidized sulfur containing compound and a raffinate being depleted in the at least one oxidized sulfur containing compound,
c) washing the raffinate obtained in step b) with a washing agent so as to remove remaining extracting agent from the raffinate so as to obtain a desulfurized hydrocarbon composition and a mixture of washing agent and extracting agent,
d) subjecting the extract obtained in step b) to at least one purification step so as to obtain purified extracting agent and a waste composition, wherein the purified extracting agent is at least partially recycled into step b), and
e) subjecting the mixture of washing agent and extracting agent obtained in step c) to a multi-step evaporation for separating the extracting agent from the washing agent so as to obtain purified washing agent, wherein the purified washing agent is at least partially recycled into step c), and wherein the multi-step evaporation comprises at least two subsequent evaporation steps, wherein the first evaporation step is performed at a higher pressure than the at least one subsequent evaporation step.

2. The process in accordance with claim 1, wherein the oxidized crude hydrocarbon composition provided in step a) has been produced by reacting a crude hydrocarbon composition being selected from the group consisting of diesel, kerosine, gasoline, naphtha, vacuum gas oil, light cycle oil, heavy cycle oil, marine gas oil, marine diesel oil, marine fuel oil, residual fuel oil, lube oil and arbitrary combinations of two or more of the aforementioned compositions with an oxidizing agent.

3. The process in accordance with claim 1 or 2, wherein the extracting agent used in step b) is an aprotic and/or polar extracting agent, which is preferably selected from the group consisting of methanol, acetonitrile, N-methyl-2-pyrrolidone, dimethylformamide, dimethyl sulfoxide, furfural, sulfolane and arbitrary combinations of two or more of the aforementioned compounds.

4. The process in accordance with any of the preceding claims, wherein the liquid-liquid extraction in step b) is performed in an agitated extraction column and preferably in an agitated countercurrent extraction column, wherein the agitated extraction column comprises two or more compartments, which are separated from each other by static partition plates, wherein at least some and preferably all of the compartments comprise a rotating shaft comprising one or more agitators being preferably selected from the group consisting of discs, blades, paddles, turbine impellers, fins and arbitrary combinations of two or more of the aforementioned agitators.

5. The process in accordance with any of the preceding claims, wherein at least one, preferably at least two, more preferably at least three, still more preferably at least four and most preferably all five of the following are fulfilled:
i) the liquid-liquid extraction b) is performed in an agitated extraction column comprising one or more rotating shafts, each of which comprising one or more agitators being preferably selected from the group consisting of discs, blades, paddles, turbine impellers, fins and arbitrary combinations of two or more of the aforementioned agitators, wherein the rotary speed of the rotating shaft(s) is adjusted to 5 to 1,000 rpm and more preferably 5 to 50 rpm,
ii) during the liquid-liquid extraction being performed in step b), a two-phase system is processed, wherein the extracting agent forms the continuous phase, in which droplets of the oxidized crude hydrocarbon composition are dispersed, wherein the agitated extraction column is operated so that the size of the droplets dispersed in the continuous phase is 0.5 to 10 mm and more preferably 1 to 3 mm,
iii) in the liquid-liquid extraction being performed in step b) an extracting agent is used so that the difference between the density of the extracting agent and the density of the oxidized crude hydrocarbon composition is 15 to 400 kg/m³,
iv) in the liquid-liquid extraction being performed in step b) an extracting agent is used so that the interfacial tension of the extracting agent and the oxidized crude hydrocarbon composition is 0.0005 to 0.07 N/m as measured with the drop volume method using a drop volume tensiometer-DVT50,
v) in the liquid-liquid extraction being performed in step b) an extracting agent is used having an electric dipole moment of at least 1.5 debye, preferably of at least 3.2 debye and more preferably of 3.2 to 4.2 debye.

6. The process in accordance with any of the preceding claims, wherein the liquid-liquid extraction and the washing step are performed in one device which comprises a first kind of compartments, in which the liquid-liquid extraction is performed, and a second kind of compartments, in which the washing step is performed.

7. The process in accordance with any of the preceding claims, wherein the desulfurized hydrocarbon composition obtained in step c) has a content of sulfur containing compounds of at most 20 ppm and preferably of at most 10 ppm, a content of washing agent of at most 20,000 ppm and more preferably of at most 10,000 ppm and a content of extracting agent of at most 25,000 ppm and more preferably of at most 11,000 ppm.

8. The process in accordance with any of the preceding claims, wherein the extract obtained in step b) is subjected in step d) i) to a multi-step evaporation comprising at least two subsequent evaporation steps, wherein the first evaporation step is performed at a higher pressure than the at least one subsequent evaporation step, and/or ii) to at least one distillation step and preferably to at least two subsequent distillation steps.

9. The process in accordance with any of the preceding claims, wherein the multi-step evaporation performed in step e) comprises a first evaporation step and at least a subsequent second evaporation step, wherein the mixture of washing agent and extracting agent obtained in step c) is introduced into the first evaporation step and separated therein into a first vapor phase and a first liquid phase, wherein the first liquid phase is introduced into the second evaporation step and separated therein into a second vapor phase and a second liquid phase, wherein the first vapor phase is used in the second evaporation step as heat source, wherein the first evaporation step is performed at an absolute pressure of 200 to 400 kPa and preferably at 250 to 300 kPa, wherein the second evaporation step is performed at an absolute pressure of 100 to 250 kPa and preferably at an absolute pressure of 160 to 230 kPa, and wherein, if the second evaporation step is the last evaporation step of the multi-step evaporation performed in step e), at least a portion of the second liquid phase is recycled as washing agent into step c) or used as heat source in the first evaporation step.

10. The process in accordance with claim 9, wherein the multi-step evaporation performed in step e) further comprises at least a subsequent third evaporation step, wherein the second liquid phase is introduced into the third evaporation step and separated therein into a third vapor phase and a third liquid phase, wherein the second vapor phase is used in the third evaporation step as heat source, wherein the third evaporation step is performed at an absolute pressure of 50 to 150 kPa and preferably at an absolute pressure of 70 to 130 kPa, wherein, if the third evaporation step is the last evaporation step of the multi-step evaporation performed in step e), at least a portion of the third liquid phase is recycled as washing agent into step c) or used as heat source in the first evaporation step, wherein preferably the multi-step evaporation performed in step e) further comprises at least a subsequent fourth evaporation step, wherein the third liquid phase is introduced into the fourth evaporation step and separated therein into a fourth vapor phase and a fourth liquid phase, wherein the third vapor phase is used in the fourth evaporation step as heat source, wherein the fourth evaporation step is performed at an absolute pressure of 10 to 30 kPa and preferably at an absolute pressure of 15 to 25 kPa, and wherein, if the fourth evaporation step is the last evaporation step of the multi-step evaporation performed in step e), at least a portion of the fourth liquid phase is recycled as washing agent into step c) or used as heat source in the first evaporation step.

11. A plant for desulfurizing a crude hydrocarbon composition, such as diesel or kerosine, wherein the plant comprises:
a) a liquid-liquid extraction unit comprising an inlet line for oxidized crude hydrocarbon composition, an inlet line for extracting agent, an outlet line for extract and an outlet line for raffinate,
b) a washing unit comprising an inlet line for raffinate being connected with the outlet line for raffinate of the liquid-liquid extraction unit a), an inlet line for washing agent, an outlet line for desulfurized hydrocarbon composition and an outlet line for a mixture of washing agent and extracting agent,
c) an extracting agent recovering unit comprising an inlet line for extract being connected with the outlet line for extract of the liquid-liquid extraction unit a), an outlet line for waste composition and an outlet line for purified extracting agent, which is connected with the inlet line for extracting agent of the liquid-liquid extraction unit, and
d) a multi-step evaporation unit comprising an inlet line for a mixture of washing agent and extracting agent being connected with the outlet line for a mixture of washing agent and extracting agent of the washing unit b), an outlet line for extracting agent and an outlet line for purified washing agent, wherein the outlet line for purified washing agent is connected with the inlet line for washing agent of the washing unit b), and wherein the multi-step evaporation unit comprises at least two evaporators.

12. The plant in accordance with claim 11, wherein the liquid-liquid extraction unit a) and/or the washing unit b) comprises at least one agitated column and preferably an agitated countercurrent column, wherein the agitated column comprises two or more compartments, which are separated from each other by static partition plates, wherein at least some and preferably all of the compartments comprise a rotating shaft comprising one or more agitators being preferably selected from the group consisting of discs, blades, paddles, turbine impellers, fins and arbitrary combinations of two or more of the aforementioned agitators.

13. The plant in accordance with claim 11 or 12, wherein the liquid-liquid extraction unit a) and the washing unit b) are both included in one column, which comprises a first kind of compartments being separated from each other by static partition plates, wherein each of these compartments comprises a rotating shaft comprising one or more agitators being preferably selected from the group consisting of discs, blades, paddles, turbine impellers, fins and arbitrary combinations of two or more of the aforementioned agitators, and which comprises a second kind of compartments being separated from each other by static partition plates, wherein each of these compartments comprises a rotating shaft comprising one or more agitators being preferably selected from the group consisting of discs, blades, paddles, turbine impellers, fins and arbitrary combinations of two or more of the aforementioned agitators, wherein the geometry and/or dimensions of the one or more compartments and/or agitators of the first kind of compartments may be the same or may differ from those of the second kind of compartments.

14. The plant in accordance with any of claims 11 to 13, wherein the extracting agent recovering unit c) comprises i) a multi-step evaporation unit comprising at least two evaporators, an inlet line for extract being connected with the outlet line for extract of the liquid-liquid extraction unit a), an outlet line for waste composition and an outlet line for extracting agent, and/or ii) one, two or more distillation columns.

15. The plant in accordance with any of claims 11 to 14, wherein the multi-step evaporation unit d) comprises a first evaporator and at least a subsequent second evaporator, wherein the first evaporator comprises an inlet line being connected with the outlet line for a mixture of washing agent and extracting agent of the washing unit b), an outlet line for a liquid phase and an outlet line for a vapor phase, wherein the second evaporator comprises an inlet line being connected with the outlet line for a liquid phase of the first evaporator, a heat exchanger being connected with the outlet line for a vapor phase of the first evaporator, an outlet line for a liquid phase and an outlet line for a vapor phase, wherein, if the multi-step evaporation unit does not comprise any further subsequent evaporator, the outlet line for a liquid phase of the second evaporator is connected with the inlet line for washing agent of the washing unit b), wherein preferably the multi-step evaporation unit d) further comprises at least a subsequent third evaporator, wherein the third evaporator comprises an inlet line being connected with the outlet line for a liquid phase of the second evaporator, a heat exchanger being connected with the outlet line for a vapor phase of the second evaporator, an outlet line for a liquid phase and an outlet line for a vapor phase, wherein, if the multi-step evaporation unit does not comprise any further subsequent evaporator, the outlet line for a liquid phase of the third evaporator is connected with the inlet line for washing agent of the washing unit b), and wherein preferably the multi-step evaporation unit d) further comprises at least a subsequent fourth evaporator, wherein the fourth evaporator comprises an inlet line being connected with the outlet line for a liquid phase of the third evaporator, a heat exchanger being connected with the outlet line for a vapor phase of the third evaporator, an outlet line for a liquid phase and an outlet line for a vapor phase, wherein, if the multi-step evaporation unit does not comprise any further subsequent evaporator, the outlet line for a liquid phase of the fourth evaporator is connected with the inlet line for washing agent of the washing unit b).
